# FASCICULE DE BREVET EUROPEEN

(11) **EP 0 981 005 B1**
(45) Date de publication et mention de la délivrance du brevet: **25.09.2002**
(21) Numéro de dépôt: 99420163.0
(22) Date de dépôt: 13.07.1999
(51) Int. Cl.: F16L 37/133

(54) **Dispositif d'accouplement d'un appareil sur une cartouche de fluide sous pression**
Kupplungsvorrichtung eines Gerätes auf einer unter Druck stehenden Kassette
Coupling device for connecting a cartridge under pressure

(30) Priorité: 14.08.1998 FR 9810523
(43) Date de publication de la demande: 23.02.2000
(73) Titulaire: APPLICATION DES GAZ, 69563 Saint Genis Laval (FR)
(72) Inventeur: Huguet, Alain, 69300 Caluire et Cuire (FR); Mandica, Franck, 69130 Ecully (FR); Carrato, Eric, 38090 Vaulx-Milieu (FR); Magnouloux, Guy, 25000 Besancon (FR)
(74) Mandataire: Guerre, Dominique

(56) Documents cités:
- EP-A- 0 278 873
- FR-A- 2 353 793
- FR-A- 2 376 999
- US-A- 3 684 190

## Description

L'invention concerne un dispositif permettant d'accoupler ou de désaccoupler rapidement :
- une cartouche d'un fluide sous pression, tel qu'un gaz de pétrole liquéfié, par exemple du butane, ladite cartouche (récipient à usage unique) comportant une valve de prélèvement avec un bourrelet annulaire entourant la tête de valve,
- et un appareil consommant ce fluide à des fins diverses.

L'accouplement assure deux fonctions distinctes, à savoir, d'une part, la liaison positive entre l'appareil et la cartouche, et, d'autre part, l'ouverture de la valve et la liaison étanche avec la cartouche et l'appareil.

On connaît, par la demande de brevet européen N° 0 278 873, un dispositif d'accouplement composé :
- d'un noyau central solidaire de l'appareil et comprenant les moyens de prélèvement du fluide, agencés pour coopérer de manière étanche avec la tête de valve de la cartouche, et des moyens d'acheminement vers l'appareil du fluide prélevé,
- et d'une pièce annulaire pouvant pivoter autour du noyau et comportant plusieurs pattes élastiques et longitudinales d'accrochage, réparties autour de son axe en ménageant entre elles des intervalles, chaque patte étant munie d'un cran radial extérieur et d'une portée intérieure apte à coopérer avec un organe de poussée solidaire du noyau central, pour repousser chaque cran dans et sous le bourrelet annulaire de la cartouche.

Dans ce dispositif où la pièce annulaire est vissée sur le noyau central, les manoeuvres d'accouplement nécessitent de manipuler la pièce annulaire, d'abord dans un sens, pour éloigner ses organes de poussée des portées intérieures des pattes élastiques, puis, après encliquetage des crans des pattes dans le bourrelet annulaire de la cartouche, de la faire tourner en sens inverse et sur plusieurs tours, pour ramener les organes de poussée contre les portées intérieures des pattes et assurer l'engagement et le blocage de leurs crans dans le bourrelet. Bien que simple, cette manoeuvre nécessite des rotations en sens inverse et sur plusieurs tours de la pièce annulaire.

La présente invention a pour objet de remédier à ces inconvénients en fournissant un dispositif d'accouplement, de maniement encore plus aisé, et identifiable ou repérable par l'opérateur.

A cet effet, dans le dispositif selon l'invention, les organes de poussée des pattes vers l'exterieur de la pièce annulaire sont constitués par des tenons radiaux formant cames, en même nombre que les pattes d'accrochage et avec la même répartition que ces pattes dans les intervalles entre lesquels ils s'insèrent en position de déverrouillage, tandis que chaque patte est munie d'une portée intérieure, cylindrique ou en forme de came, apte à venir en appui, selon une direction generalement perpendiculaire à l'axe du dispositif, sur l'un des tenons pour, par réaction, éloigner radialement vers l'extérieur son cran extérieur, et en ce que ladite pièce annulaire est liée en rotation à un organe de commande en rotation ayant une course angulaire limitée entre deux positions, à savoir une position en rotation déverrouillée et repérée de la pièce annulaire, dans laquelle les pattes sont libres en flexion, et une position en rotation verrouillée de la pièce annulaire, dans laquelle les pattes sont bloquées sous le bourrelet de la cartouche, et repoussées par leurs tenons respectifs.

Ainsi, avec ce dispositif, le passage de la position déverrouillée à la position verrouillée s'effectue par rotation relative entre le noyau central et la pièce annulaire, sur une faible course angulaire correspondant à celle nécessaire à une patte élastique pour venir de sa position déverrouillée dans laquelle elle est libre en flexion et entre deux tenons, à sa position verrouillée, dans laquelle sa portée est en appui et repoussée par un tenon.

Dans une forme d'exécution de l'invention, l'organe de commande lié à la pièce annulaire comprend un levier saillant radialement d'un côté et ce levier est muni, dans son moyeu, d'au moins une butée apte à coopérer avec une butée complémentaire saillant radialement à l'intérieur d'un capot solidaire du noyau central, ce capot entourant au moins partiellement la pièce annulaire et le moyeu du levier.

Ces deux butées limitent les mouvements du levier en rotation et de la pièce annulaire, à la course nécessaire pour passer de l'une à l'autre des positions du dispositif d'accouplement.

Avantageusement, avec un capot formant une excroissance sensiblement radiale, les butées ménagées sur le levier et sur le capot sont disposées de manière que, en position verrouillée, le levier soit disposé sensiblement aligné parallèlement et au-dessous de l'excroissance, et que, en position déverrouillée, il forme, par rapport à sa position verrouillée, un angle, par exemple de l'ordre de 60°.

Avec cet agencement, l'opérateur assurant l'accouplement de l'appareil sur une cartouche peut de la seule main tenant l'appareil, d'une part, engager verticalement la partie du dispositif d'accouplement dans la cuvette de la valve de la cartouche, en assurant l'ouverture de cette dernière, et, simultanément et avec un doigt, déplacer le levier pour l'amener de sa position déverrouillée à sa position verrouillée.

Par ailleurs, cette position particulière du levier en position de verrouillage permet de constater visuellement que cette position est atteinte, et, à l'inverse de constater immédiatement toute absence d'accouplement verrouillé.

D'autres caractéristiques et avantages ressortiront de la description qui suit en référence au dessin schématique annexé représentant, à titre d'exemple, une forme d'exécution de ce dispositif dans le cas de son application à un réchaud de cuisson avec un seul brûleur.

**Figure 1** est une vue en perspective de l'ensemble du réchaud incorporant un dispositif d'accouplement selon l'invention.

**Figure 2** est une vue en coupe longitudinale montrant les différents éléments du dispositif d'accouplement proprement dit.

**Figures 3 et 4** sont des vues en perspective, respectivement de la pièce portant les tenons de verrouillage et de la pièce annulaire comportant les pattes coopérant avec les tenons, appartenant au dispositif d'accouplement selon figure 2.

**Figure 5** est une vue partielle en coupe transversale montrant les différents éléments selon figure 2, lorsqu'ils sont assemblés et en position d'accouplement sur le bourrelet de la valve d'une cartouche.

**Figure 6** est une vue en coupe suivant VI-VI de figure 5.

**Figures 7** et **8** sont des vues schématiques montrant, par dessous, les positions relatives des tenons et pattes élastiques du dispositif d'accouplement, lorsqu'ils sont respectivement en position de déverrouillage et en position de verrouillage.

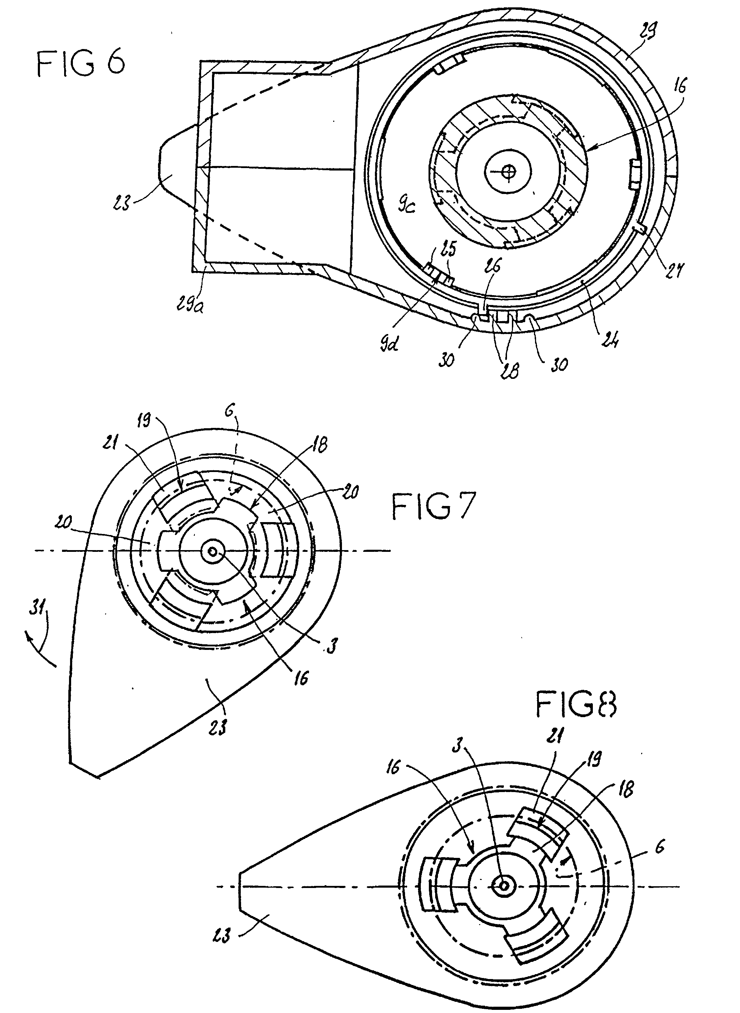

Le dispositif d'accouplement selon l'invention est destiné à coopérer avec une cartouche (récipient à usage unique) de fluide sous pression, et notamment de gaz combustible qui, comme montré plus en détails à la figure 5, comprend un réservoir 2 sur lequel est sertie une valve 3 comportant une cuvette axiale 4, elle-même liée au réservoir 2, par enroulement de son bord sur le bord enroulé du réservoir 2 avec interposition d'un joint d'étanchéité 5. Ce mode de liaison forme sur la cartouche un bourrelet annulaire 6 qui est surélevé par rapport à une gorge intérieure 7 ménagée dans la cuvette 4, et entoure la tête de valve 51.

Le dispositif d'accouplement de l'appareil comprend un noyau central 8, une pièce annulaire 9, une pièce cylindrique 16, et un organe 23 de commande en rotation.

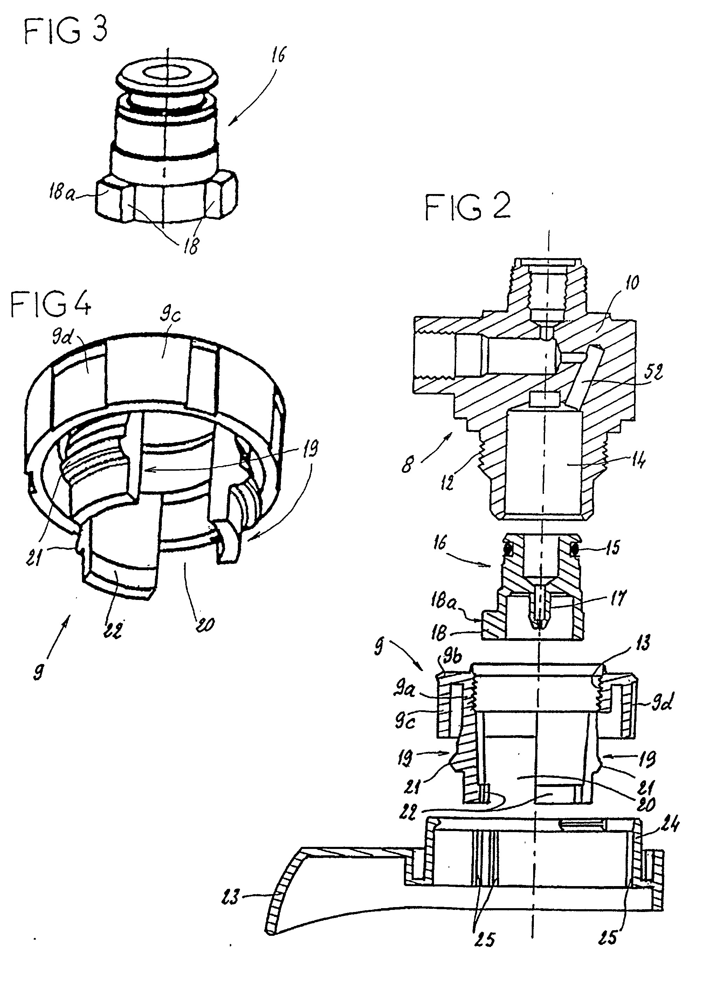

Dans la forme d'exécution représentée, le noyau central 8 fait partie d'un corps métallique 10 appartenant lui-même à un robinet et formant support pour un brûleur 1. Mais il est évident que ce corps peut être conformé différemment en fonction de la destination de l'appareil. Comme montré par les figures 2 et 5, le noyau central 8 est muni d'un filetage extérieur 12 sur lequel peut se visser la pièce annulaire 9, munie d'un alésage taraudé 13. Cette pièce 10 comporte également un alésage borgne axial 14 débouchant vers le bas, et dans lequel est emmanchée serrée, et avec étanchéité par un joint 15, une pièce cylindrique 16. Cette dernière comporte un embout axial 17 de commande d'ouverture du clapet 3a de la valve 3 et, à l'extérieur, des tenons 18 saillants radialement et présentant des faces périphériques formant cames 18a. Le noyau 8 comporte par ailleurs des moyens 52 d'acheminement du gaz prélevé.

La pièce annulaire 9 est composée d'un moyeu 9a, d'une collerette 9b et d'une jupe périphérique 9c. Le moyeu 9a, qui porte le taraudage 13, est prolongé vers le bas par des pattes longitudinales 19 qui sont au nombre de trois dans cette forme d'exécution et qui sont réparties angulairement à 120° les unes des autres, en ménageant entre elles des intervalles 20, visibles figure 4.

Chacune de ces pattes longitudinales 19 est déformable élastiquement et comporte, en saillie de sa face extérieure, un cran 21 apte à pénétrer dans la gorge 7 de la cuvette 4 d'une cartouche 2 et, intérieurement, une portée cylindrique 22 ayant un diamètre inférieur à celui extérieur des faces cylindriques 18a ménagées sur chaque tenon 18 de la pièce 16 liée au noyau central 8. La figure 7 montre que les intervalles 20 entre les pattes élastiques 19 sont déterminés pour recevoir les tenons 18 de la pièce 16 qui sont en même nombre et ont la même répartition que ces pattes. La comparaison de la figure 7 avec la figure 8 permet de constater que toute rotation relative de la pièce annulaire 9 par rapport au noyau 8 et donc à la pièce cylindrique 16, amène les portées cylindriques 22 des pattes élastiques 19 contre les portées cylindriques 18a des tenons 18, en provoquant ainsi l'écartement radial et vers l'extérieur de ces pattes, et l'engagement positif de leurs crans 21 dans la gorge 7 de la cartouche 2, et cela pour une faible course qui, dans cette forme d'exécution, est au maximum de 60°.

Il est précisé que, pour faciliter la coopération des portées 22 avec les portées 18a des tenons 18, l'une de ces portées, par exemple celle 22, peut être en forme de came.

La pièce annulaire 9 est solidaire d'un organe de commande qui, dans cette forme d'exécution, est constitué par un levier 23, solidaire d'un moyeu 24, s'emboîtant sur la jupe annulaire 9c de ladite pièce 9. Le moyeu 24 comporte, dans sa partie interne, des saillies longitudinales 25 qui s'emboîtent dans des gorges longitudinales 9d de ladite jupe 9c, pour assurer l'entraînement en rotation de la pièce annulaire. Cette rotation a pour but d'amener la pièce 9 de sa position de déverrouillage, montrée à la figure 7, à sa position de verrouillage, montrée à la figure 8, suivant une rotation limitée dans les deux sens.

Dans la forme d'exécution représentée à la figure 6, cette limitation est assurée, d'une part, par deux nervures longitudinales 26 et 27, saillant de la face extérieure du moyeu 24 pour constituer butées, et d'autre part, par au moins une nervure 28, et en l'occurrence deux à la figure 6, saillant de la face intérieure d'un capot 29a en deux parties. Comme montré à la figure 5, ce capot enveloppe le corps 10 de l'appareil, donc le noyau central 8 et une partie du moyeu 24 et de la pièce annulaire 9.

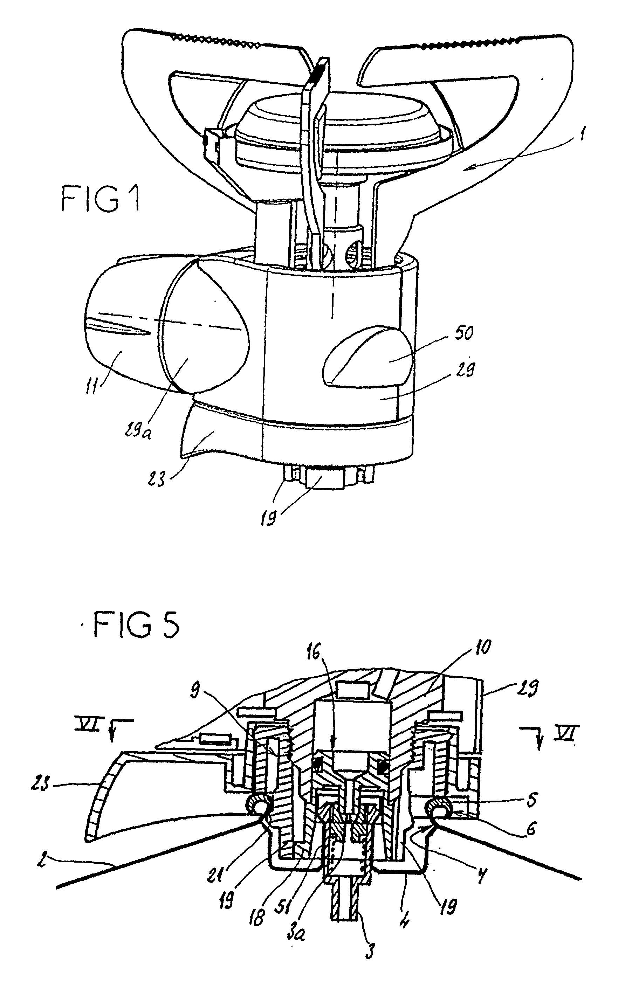

Préférentiellement, comme montré à la figure 1, le capot 29 en section transversale, une forme oblongue ou en aile d'avion, favorisant la prise en main, voire avec une seule main, de l'appareil, tout en pouvant manipuler le volant de commande 11 du gaz ou un bouton d'actionnement 50 d'un dispositif piezo-électrique d'allumage.

Lorsque, en raison de la structure de l'appareil, par exemple de la présence d'un robinet avec le volant de commande 11, le capot 29 comporte une excroissance sensiblement radiale 29a, les nervures 26, 27 et 28 sont réparties, comme montré à la figure 6, de manière à ce que, en position en rotation verrouillée, l'extrémité libre du levier 23 soit disposée sensiblement parallèlement et au-dessous de cette excroissance 29a, et que, en position en rotation déverrouillée, il se trouve dans la position représentée à la figure 7.

Pour l'utilisateur, ceci permet de visualiser et percevoir directement la position verrouillée et la position déverrouillée du dispositif d'accouplement selon l'invention.

La figure 6 montre que la butée fixe formée par les deux nervures 28 est précédée de chaque côté par un bourrelet 30, espacé angulairement par rapport auxdites nervures. Ainsi, tout effort sur le levier 23 pour l'amener d'une position à une autre, par exemple de la position verrouillée représentée à la figure 6 à la position déverrouillée de la figure 7, nécessite de fournir un effort de démarrage plus important pour permettre à la butée 26 d'échapper du bourrelet 30 puis, en fin de course, de refournir un effort plus important pour faire passer la butée 27 sur l'autre bourrelet 30. Ainsi, ces bourrelets ont, non seulement une fonction de verrouillage, mais aussi une fonction sensitive d'indication de fin de course. Dans une variante, le bourrelet 30 n'est prévu que du côté de la butée fixe 28 indiquant la position verrouillée.

Avec un appareil équipé du dispositif d'accouplement selon l'invention et comportant une excroissance radiale 29a, pour accoupler l'appareil à une cartouche 2 de gaz, on saisit d'une main l'appareil par l'excroissance, et on introduit la partie inférieure de la pièce annulaire 9 dépassant du capot 29 dans la cuvette 4 de la cartouche 2, tenue de l'autre main. Si le levier 23 est en position de déverrouillage, les extrémités des pattes élastiques 19 sont libres en flexion et peuvent donc, sous l'effort d'engagement qui leur est communiqué, se déformer élastiquement vers l'intérieur, lors de l'appui de leurs crans extérieurs 21 sur le bord du bourrelet 6 de la cartouche. En fin d'engagement, l'embout 17 de la pièce cylindrique 16 pénètre dans la tête 51 de la valve 3 et provoque le recul du clapet 3a, tandis que, simultanément, par l'élasticité des pattes, les crans 21 pénètrent dans la gorge 7 sous le bourrelet 6. Pour verrouiller, l'opérateur n'a plus qu'à faire pivoter le levier 23 dans le sens de la flèche 31 de figure 6 jusqu'à ce que ce levier soit aligné au-dessous de l'excroissance 29a, comme montré à la figure 6. La manipulation du levier peut être effectuée par l'un des doigts de la main, par exemple par le pouce, pendant que le reste de la main continue à appliquer verticalement l'appareil sur la cartouche.

Il ressort de ce qui précède que, grâce à sa structure, ce dispositif nécessite un pivotement angulaire du levier 23 sur une très faible course, aussi bien pour assurer l'accouplement verrouillé que le désaccouplement de l'appareil avec une cartouche de gaz et que, lorsque l'appareil comporte une proéminence radiale, comme l'excroissance 29a, l'alignement du levier avec ladite proéminence permet de constater, visuellement et immédiatement, et donc de repérer que l'appareil est correctement accouplé avec la cartouche.

## Revendications

1. Dispositif d'accouplement d'un appareil sur une cartouche de fluide sous pression, laquelle comprend une valve de prélèvement (3) avec un bourrelet annulaire (6) entourant la tête (51) de valve, ledit dispositif comprenant :
- un noyau central (8), solidaire dudit appareil, comprenant des moyens (17) de prélèvement du fluide, agencés pour coopérer de manière étanche avec la tête de valve, et des moyens (52) d'acheminement du fluide prélevé vers l'appareil,
- et une pièce annulaire (9) pouvant pivoter autour du noyau (8) et comportant plusieurs pattes élastiques et longitudinales d'accrochage (19) réparties autour de son axe, en ménageant entre elles, des intervalles (20), chaque patte étant munie d'un cran radial extérieur (21) et d'une portée intérieure (22) apte à coopérer avec un organe de poussée solidaire du noyau central (8), pour repousser chaque cran (21) dans et sous le bourrelet annulaire (6) de la cartouche,
**caractérisé en ce que** les organes de poussée vers l'exterieur des pattes (19) de la pièce annulaire (9) sont constitués par des tenons radiaux (18) formant cames, en même nombre que les pattes d'accrochage (19) et avec la même répartition que ces pattes dans les intervalles (20) entre lesquels ils s'insèrent en position de déverrouillage, tandis que chaque patte (19) est munie d'une portée intérieure (22), cylindrique ou en forme de came, apte à venir en appui, selon une direction generalement perpendiculaire à l'axe du dispositif, sur l'un des tenons (18) pour, par réaction, éloigner radialement vers l'extérieur son cran extérieur (21), et **en ce que** ladite pièce annulaire (9) est liée à un organe de commande en rotation (23) ayant une course angulaire limitée entre deux positions, à savoir une position en rotation déverrouillée et repérée de la pièce annulaire (9), dans laquelle les pattes (19) sont libres en flexion, et une position en rotation verrouillée de la pièce annulaire (9), dans laquelle les pattes (19) sont bloquées et repoussées par leurs tenons respectifs (18), et bloquées sous le bourrelet (6).

2. Dispositif selon la revendication 1, **caractérisé en ce que** l'organe de commande (23) lié à la pièce annulaire (9) comprend un levier (23) saillant radialement d'un côté et un moyeu (24) muni d'au moins une butée (26) apte à coopérer avec une butée fixe complémentaire (28) saillant radialement à l'intérieur d'un capot (29) solidaire du noyau central (8), ce capot entourant au moins partiellement la pièce annulaire (9) et le moyeu (24) du levier.

3. Dispositif selon la revendication 2, **caractérisé en ce que** la butée fixe (28) est ménagée dans un capot (29) formant une excroissance sensiblement radiale (29a), et cette butée, de même que celles (26,27) du levier, sont disposées et réparties de manière que, en position verrouillée, ledit levier (23) soit sensiblement aligné avec l'excroissance radiale.

4. Dispositif selon la revendication 1, **caractérisé en ce que** la butée fixe (28) est associée, au moins d'un côté, à un bourrelet (30), espacé d'elle et coopérant avec l'une des butées (26,27) du levier (23) pour former détecteur sensitif de fin de course.

5. Dispositif selon la revendication 2, **caractérisé en ce que** le capot (29) a une section transversale oblongue ou en aile d'avion.

## Claims

1. A device for coupling an appliance to a cartridge of pressurized fluid, which cartridge comprises a withdrawing valve with a rolled annular rim surrounding the valve head, said device comprising:
- a central core secured to said appliance, comprising means for withdrawing the fluid, which means are designed to interact in a leaktight manner with the valve head, and means for conveying the withdrawn fluid toward the appliance,
- and an annular part which can pivot around the core and comprises a number of elastic and longitudinal catching tabs distributed about its axis, forming gaps between them, each tab being equipped with an external radial catching tooth and with an internal bearing surface which can interact with a thrusting member secured to the central core, in order to push each catching tooth back into and under the rolled annular rim of the cartridge,
**characterized in that** the members for pushing towards the outside the tabs of the annular part consist of radial studs forming cams, there being as many of these as there are catching tabs, and these cams having the same distribution as these tabs into the gaps between which they are inserted in the unlocked position, while each tab is equipped with a cylindrical or cam-shaped internal bearing surface capable of bearing, in a direction generally perpendicular to the axis of the device, on one of the studs in order, by reaction, to push its external catching tooth radially outwards, and **in that** said annular part is connected to a turning member which has a restricted angular travel between two positions, namely an unlocked and identified rotational position of the annular part, in which position the tabs are free to flex, and a locked rotational position of the annular part, in which position the tabs are locked and pushed back by their respective studs, and locked under the rolled rim.

2. The device as claimed in claim 1, wherein the turning member connected to the annular part comprises a lever projecting radially from one side and a hub equipped with at least one stop able to interact with a complementary stationary stop projecting radially on the inside of a cap secured to the central core, this cap at least partially surrounding the annular part and the hub of the lever.

3. The device as claimed in claim 2, wherein the stationary stop is formed in a cap forming an appreciably radial protrusion, and this stop, and those on the lever, are arranged and distributed in such a way that in the locked position said lever is essentially in line with the radial protrusion.

4. The device as claimed in claim 1, wherein the stationary stop is associated, at least on one side, with a rolled rim spaced from it and interacting with one of the stops on the lever in order to form a sensitive end-of-travel detector.

5. The device as claimed in claim 2, wherein the cap has an oblong or airplane wing-shaped cross-section.

## Patentansprüche

1. Vorrichtung zum Anschließen eines Gerätes an einer Kartusche eines unter Druck stehenden Fluides, die ein Entnahmeventil (3) mit einer den Ventilkopf (51) umgebenden Ringwulst (6) aufweist, wobei die Vorrichtung aufweist:
- einen mit dem Gerät fest verbundenen zentralen Kern (8), der Mittel (17) zum Entnehmen des Fluides, die so ausgelegt sind, daß sie mit dem Ventilkopf dicht zusammenwirken, und Mittel (52) zum Weiterleiten des entnommenen Fluides zu dem Gerät aufweist,
- und ein Ringstück (9), das um den Kern (8) drehbar ist und mehrere elastische und längs verlaufende Verankerungsflansche (19) aufweist, die um seine Achse verteilt sind, indem sie zwischen sich Zwischenräume (20) ausbilden, wobei jeder Flansch mit einer radialen äußeren Stufe (21) und einer inneren Anlagefläche (22) versehen ist, die geeignet ist, mit einem fest mit dem zentralen Kern (8) verbundenen Druckorgan zusammenzuwirken, um jede Stufe (21) in und unter die Ringwulst (6) der Kartusche wegzudrücken,
**dadurch gekennzeichnet, daß** die Druckorgane zum nach außen Drücken der Flansche (19) des Ringstückes (9) als Nocken bildende radiale Zapfen (18) in gleicher Anzahl wie die Verankerungsflansche (19) und in der gleichen Verteilung wie diese Flansche in den Zwischenräumen (20), zwischen die sie sich in der Entriegelungsstellung einfügen, ausgebildet sind, während jeder Flansch (19) mit einer zylindrischen oder nockenförmigen inneren Anlagefläche (22) versehen ist, die geeignet ist, in einer Richtung allgemein senkrecht zur Achse der Vorrichtung an einem der Zapfen (18) in Anlage zu kommen, um durch Gegenkraft ihre äußere Stufe (21) radial nach außen zu verdrängen, und daß das Ringstück (9) mit einem Drehbetätigungsorgan (23) verbunden ist, das einen Winkelhub aufweist, der zwischen zwei Stellungen begrenzt ist, nämlich einer entriegelten und markierten Drehstellung des Ringstücks (9), in der die Flansche (19) frei biegbar sind, und einer verriegelten Drehstellung des Ringstücks (9), in der die Flansche (19) durch ihre jeweiligen Zapfen (18) festgelegt und weggedrückt und unter der Wulst (6) festgelegt sind.

2. Vorrichtung nach Anspruch 1, **dadurch gekennzeichnet, daß** das mit dem Ringstück (9) verbundene Betätigungsorgan (23) einen Hebel (23), der radial zu einer Seite vorragt, und eine Nabe (24) aufweist, die mit zumindest einem Anschlag (26) versehen ist, der geeignet ist, mit einem komplementären feststehenden Anschlag (28) zusammenzuwirken, der radial in das Innere einer fest mit dem zentralen Kern (8) verbundenen Haube (29) vorragt, wobei diese Haube das Ringstück (9) und die Nabe (24) des Hebels zumindest teilweise umgibt.

3. Vorrichtung nach Anspruch 2, **dadurch gekennzeichnet, daß** der feststehende Anschlag (28) in einer Haube (29) ausgebildet ist, die eine etwa radiale Ausstülpung (29a) bildet, und daß dieser Anschlag ebenso wie diejenigen (26, 27) des Hebels derart angeordnet und verteilt sind, daß der Hebel (23) in der Verriegelungsstellung etwa mit der radialen Ausstülpung ausgerichtet ist.

4. Vorrichtung nach Anspruch 1, **dadurch gekennzeichnet, daß** der feststehende Anschlag (28) zumindest auf einer Seite einer Wulst (30) zugeordnet ist, die von ihm beabstandet ist und mit dem einen der Anschläge (26, 27) des Hebels (23) zusammenwirkt, um einen taktilen Sensor für das Ende des Betätigungswegs zu bilden.

5. Vorrichtung nach Anspruch 2, **dadurch gekennzeichnet, daß** die Haube (29) einen länglichen oder tragflächenförmigen Querschnitt aufweist.
